# EUROPÄISCHE PATENTSCHRIFT

(11) **EP 2 930 353 B1**
(45) Veröffentlichungstag und Bekanntmachung des Hinweises auf die Patenterteilung: **10.04.2019**
(21) Anmeldenummer: 14164225.6
(22) Anmeldetag: 10.04.2014
(51) Int. Cl.: F03D 80/30, F03D 1/06

(54) **Windenergieanlagenrotorblatt mit einer Potentialausgleichsanordnung**
Wind turbine rotor blade with a potential equalisation arrangement
Pale de rotor d'éolienne comprenant un système d'équilibrage de potentiel

(43) Veröffentlichungstag der Anmeldung: 14.10.2015
(73) Patentinhaber: Nordex Energy GmbH, 22419 Hamburg (DE)
(72) Erfinder: Hellwig, Lutz, 17491 Greifswald (DE)
(74) Vertreter: Hauck Patentanwaltspartnerschaft mbB

(56) Entgegenhaltungen:
- JP-A- 2009 115 052
- JP-A- 2010 059 813
- US-A1- 2009 246 025

## Beschreibung

Die Erfindung betrifft ein Windenergieanlagenrotorblatt mit einer Potentialausgleichsanordnung.

Es ist bekannt, Windenergieanlagenrotorblätter mit einer Blitzschutzeinrichtung vor Schäden durch einen Blitzschlag zu bewahren. Hierzu wird in der Regel im Bereich der Blattspitze ein Blitzschutzrezeptor angeordnet. Der Strom eines in den Blitzschutzrezeptor einschlagenden Blitzes wird dann über einen Blitzschutzleiter zur Blattwurzel hin und von dort über die Gondel und den Turm der Windenergieanlage in den Erdboden abgeleitet. Besondere Schwierigkeiten entstehen, wenn innerhalb des Windenergieanlagenrotorblatts mehrere elektrisch leitfähige Elemente mehr oder weniger parallel angeordnet sind. Infolge der hohen Blitzströme kommt es dann durch elektromagnetische Induktion zu großen Potentialdifferenzen zwischen den unterschiedlichen elektrisch leitfähigen Elementen, die zu Überschlägen und dadurch zu einer Beschädigung oder gar Zerstörung des Windenergieanlagenrotorblatts führen können. Es ist bekannt, derartigen Überschlägen durch Potentialausgleichselemente entgegenzuwirken.

Aus der Druckschrift EP 1 692 752 B1 ist ein Windenergieanlagenrotorblatt bekannt geworden, bei dem ein innenliegender, elektrisch leitfähiger Holm mit einem benachbart angeordneten Blitzschutzleiter verbunden ist. Hierzu sind im Inneren des Rotorblatts Potentialausgleichselemente vorgesehen, die den Holm und den Blitzschutzleiter über eine elektrische Leitung miteinander verbinden. Der Kontakt zum Holm wird über ein leitfähiges, flächiges Band hergestellt.

Aus der Druckschrift DE 10 2012 108 124 A1 ist ein Windenergieanlagenrotorblatt bekannt geworden, bei dem ein Blitzschutzleiter aus einem Band aus elektrisch leitfähigem Material besteht, das um die Profilendkante herum an der Außenseite des Rotorblatts angeordnet ist. An der Profilendkante gibt es außerdem eine Geräuschminderungsvorrichtung mit Zacken aus Metall, die mit dem leitfähigen Band elektrisch verbunden sind und als Blitzschutzrezeptoren wirken.

Aus der Druckschrift EP 1 112 448 B2 ist ein Windenergieanlagenrotorblatt mit mehreren elektrisch leitfähigen Gurten aus einem Kohlenstofffasermaterial bekannt geworden. Zur Erhöhung der elektrischen Leitfähigkeit der Gurte werden metallbeschichtete Kohlenstoffasern eingesetzt, sodass die Stromtragfähigkeit der Gurte für einen Einsatz als Blitzschutzleiter ausreichen soll. Zusätzlich kann ein zentral angeordneter metallischer Blitzschutzleiter eingesetzt werden. Die Gurte und gegebenenfalls der zusätzliche metallische Blitzschutzleiter sind an mehreren Längspositionen über Potentialausgleichelemente in Form von innenliegenden, elektrischen Leitern miteinander verbunden.

Aus der Druckschrift EP 1 664 528 B1 ist ein Windenergieanlagenrotorblatt mit elektrisch leitfähigen Hauptgurten aus einem Kohlenstofffasermaterial und zwei im Inneren des Rotorblatts angeordneten Blitzschutzleitern bekannt geworden. Ein Potentialausgleich zwischen einem Hauptgurt und einem Blitzschutzleiter wird über ein Kupfergitter, das den Hauptgurt kontaktiert, und eine elektrische Verbindungsleitung hergestellt. Ein mittlerer Abschnitt der Verbindungsleitung ist mit dem Blitzschutzleiter verschraubt. Ein freies Ende der Verbindungsleitung ist gemeinsam mit metallischen Zwischenstücken und dem Kupfergitter mit einem Blitzschutzrezeptor verschraubt.

Aus der Druckschrift EP 1 272 759 B1 ist ein Windenergieanlagenrotorblatt bekannt geworden, bei dem an der Außenseite elektrisch leitfähige Schichten als Blitzrezeptoren aufgebracht sind. Diese sind über Verbindungsmittel mit einem innenliegenden Blitzschutzleiter verbunden.

Die Druckschrift JP 2010059813A zeigt ein Windenergieanlagenrotorblatt mit mehreren Blitzschutzrezeptoren, die jeweils mit einem druckseitigen oder mit einem saugseitigen Blitzschutzleiter verbunden sind. An der Außenseite des Rotorblatts gibt es zusätzlich erste und zweite Ableitmittel, die jeweils eine elektrisch leitfähige Schicht, beispielsweise eine dünne Metallfolie, und eine elektrisch isolierende Schicht aufweisen. Die ersten Ableitmittel sind entlang der Profilnasenkante und der Profilendkante angeordnet, die zweiten Ableitmittel verlaufen in Richtung der Profiltiefe, jeweils über einen Blitzschutzrezeptor, mit dem sie elektrisch leitfähig verbunden sind, hinweg.

Aus der Druckschrift JP 2009115052 A ist ein Windenergieanlagenrotorblatt mit einer Blitzschutzeinrichtung bekannt geworden, die ein elektrisch leitfähiges Band aufweist, das entlang der Profilnasenkante und der Profilendkante des Rotorblatts angeordnet ist. In regelmäßigen Abständen stellen Verbindungsbänder Verbindungen zwischen Profilnasenkante und Profilendkante her.

Davon ausgehend ist es die Aufgabe der Erfindung, ein Windenergieanlagenrotorblatt mit einer Potentialausgleichsanordnung zur Verbindung zweier in das Windenergieanlagenrotorblatt integrierter, elektrischer Anschlussstücke zur Verfügung zu stellen, die einen zuverlässigen Potentialausgleich zwischen den beiden Anschlussstücken bewirkt und die einfach und positionsgenau montiert werden kann.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt 10 hat zwei integrierte, elektrische Anschlussstücke 28, 30 und eine an einer Außenseite des Windenergieanlagenrotorblatts 10 befestigte Potentialausgleichsanordnung zur elektrischen Verbindung der zwei Anschlussstücke 28, 30. Die Potentialausgleichsanordnung weist die folgenden Merkmale auf:
- eine saugseitige Potentialausgleichsschiene 32, die an einer Saugseite 18 des Windenergieanlagenrotorblatts 10 angeordnet ist,
- eine druckseitige Potentialausgleichsschiene 34, die an einer Druckseite 20 des Windenergieanlagenrotorblatts 10 angeordnet ist, und
- eine Querverbindung 48, die ein hinteres Endes der saugseitigen Potentialausgleichsschiene 32 mit einem hinteren Ende der druckseitigen Potentialausgleichsschiene 34 verbindet und einen seitlichen Abstand 50 zwischen den beiden Potentialausgleichsschienen 32, 34 überbrückt,
- wobei die beiden Potentialausgleichsschienen 32, 34 jeweils ein vorderes Ende aufweisen, das elektrisch mit einem der Anschlussstücke 28, 30 verbunden ist.

Bei den beiden in das Windenergieanlagenrotorblatt integrierten Anschlussstücken kann es sich um beliebige Anschlusspunkte am Windenergieanlagenrotorblatt handein, zwischen denen ein Potentialausgleich herbeigeführt werden soll. Jedes der beiden elektrischen Anschlussstücke dient als Anschlusspunkt für ein elektrisch leitfähiges Element des Windenergieanlagenrotorblattes, beispielsweise für einen Blitzschutzleiter, für einen kohlenstofffaserhaltigen Gurt, für eine elektrische Versorgungsleitung oder für eine Abschirmung einer elektrischen Signalleitung. Die Anschlussstücke stellen die Anschlusspunkte für die Potentialausgleichsanordnung zur Verfügung. Insbesondere kann es sich um massive metallische Körper handeln, die innerhalb des Windenergieanlagenrotorblatts und/oder an dessen Oberfläche angeordnet sind.

Die Potentialausgleichsschienen und die Querverbindung weisen eine hohe elektrische Leitfähigkeit und eine hohe Stromtragfähigkeit auf, sodass im Falle eines Blitzschlags der gewünschte Potentialausgleich herbeigeführt wird, ohne dass es zu einer Beschädigung kommt. Vorzugsweise bestehen die Potentialausgleichsschienen aus massivem Metall mit Querschnittsabmessungen von beispielsweise 2 mm mal 30 mm oder mehr, insbesondere aus Kupfer. Durch eine solche, großformatige Ausgestaltung der Potentialausgleichsschienen können diese zusätzlich als Blitzrezeptoren eingesetzt werden.

Die beiden Anschlussstücke sind an unterschiedlichen Punkten des Windenergieanlagenrotorblatts angeordnet und bereits bei der Herstellung des Windenergieanlagenrotorblatts integriert worden, insbesondere durch Einbetten in ein Laminat oder durch Einbetten oder Befestigen an einem vorgefertigten Bauteil, das in das Windenergieanlagenrotorblatt integriert wird, beispielsweise in einen vorgefertigten Gurt. Beispielsweise kann eines der beiden Anschlussstücke in eine saugseitige Halbschale und das andere in eine druckseitige Halbschale des Windenergieanlagenrotorblatts integriert worden und die beiden Halbschalen können nachfolgend zu dem Windenergieanlagenrotorblatt zusammengefügt worden sein.

Aufgrund der sehr großen Abmessungen des Windenergieanlagenrotorblatts und der komplizierten Fertigungsschritte unterliegt die Anordnung der elektrischen Anschlussstücke größeren Fertigungstoleranzen. Unter Umständen kann ein Anschlussstück relativ zu seiner Sollposition um mehrere Zentimeter abweichend angeordnet sein. Dennoch sollen die Potentialausgleichsschienen aus aerodynamischen Gründen genau parallel zu der sich im Betrieb des Windenergieanlagenrotorblatts einstellenden Strömungsrichtung montiert werden.

Dies ermöglicht die Erfindung durch die zwischen den beiden hinteren Enden der Potentialausgleichsschienen geschaffene Querverbindung. Dabei ist vorgesehen, die beiden vorderen Enden an die Anschlussstücke anzuschließen bzw. sie an diesen zu befestigen, zum Beispiel mittels einer Schraubverbindung, und die hinteren Enden so anzuordnen, dass die Potentialausgleichsschienen genau in Strömungsrichtung ausgerichtet sind. Zusätzlich können die Potentialausgleichsschienen beispielsweise durch Verkleben mit einer Außenseite des Windenergieanlagenrotorblatts fixiert werden.

Die auf diese Weise gefundene Anordnung der Potentialausgleichsschienen ist aerodynamisch vorteilhaft, führt jedoch bei entsprechend großen Abweichungen bei der Anordnung der Anschlussstücke zu einem seitlichen Abstand zwischen den beiden hinteren Enden der Potentialausgleichsschienen. Dieser seitliche, d.h. quer zur Strömungsrichtung und im Wesentlichen parallel zu einer Profilendkante des Windenergieanlagenrotorblatts ausgerichtete Abstand, wird von der Querverbindung überbrückt. Dadurch werden die hinteren Enden der beiden Profilendkanten über die Querverbindung elektrisch miteinander verbunden. Die Querverbindung kann z.B. von einem metallischen elektrischen Leiter, insbesondere von einem Metallprofil, gebildet sein.

Die Bezeichnungen "vorderes Ende" und "hinteres Ende" beziehen sich stets auf die sich im Betrieb des Windenergieanlagenrotorblatts einstellende Strömungsrichtung. Mit anderen Worten sind die vorderen Enden näher an der Profilnasenkante angeordnet als die hinteren Enden. Ebenso auf die vorgesehene Anordnung an einem Windenergieanlagenrotorblatt beziehen sich die Bezeichnungen "druckseitig" und "saugseitig."

Ein besonderer Vorteil der Erfindung ist, dass trotz der beschriebenen Fertigungstoleranzen beim Integrieren der Anschlussstücke eine Potentialausgleichsanordnung aus vorgefertigten Elementen verwendet werden kann. Die Potentialausgleichsanordnung kann zudem besonders einfach und schnell montiert werden.

In einer Ausgestaltung schließt eine druckseitige Fläche der Querverbindung bündig mit einer Außenseite der druckseitigen Potentialausgleichsschiene und/oder eine saugseitige Fläche der Querverbindung bündig mit einer Außenseite der saugseitigen Potentialausgleichsschiene ab. Auf diese Weise fügt sich die Querverbindung aerodynamisch günstig zwischen den beiden Potentialausgleichsschienen ein.

In einer Ausgestaltung läuft die Querverbindung in Strömungsrichtung nach hinten dünn aus, auf eine Höhe von 5 mm oder weniger. Bevorzugt kann die Höhe dort auch im Bereich von 2 mm bis 3 mm liegen. In aerodynamischer Hinsicht entspricht das hintere Ende der Querverbindung dann im Wesentlichen der benachbart zu den Potentialausgleichsschienen angeordneten Profilendkante eines Windenergieanlagenrotorblatts, an dem die Potentialausgleichsanordnung befestigt ist.

In einer Ausgestaltung weist eine der beiden Potentialausgleichsschienen einen mit dem hinteren Ende dieser Potentialausgleichsschiene verbundenen Schenkel auf, der sich quer zu einer Längsrichtung dieser Potentialausgleichsschiene erstreckt und der die Querverbindung oder einen Teil davon bildet. Dies kann die Montage der Potentialausgleichsanordnung vereinfachen, da die Querverbindung oder ein Teil davon gemeinsam mit der Potentialausgleichsschiene montiert werden kann. Bevorzugt ist der Schenkel mit der Potentialausgleichsschiene verschweißt, wodurch ein minimaler elektrischer Übergangswiderstand zwischen der Potentialausgleichsschiene und der Querverbindung sichergestellt wird.

In einer Ausgestaltung erstreckt sich der Schenkel ausgehend von dem hinteren Ende der Potentialausgleichsschiene in beide Richtungen. In diesem Fall ist die Potentialausgleichsschiene mit dem Schenkel insgesamt etwa T-förmig. Je nach der relativen Anordnung der anderen Potentialausgleichsschiene kann eine Seite des Schenkels für die Querverbindung verwendet werden. Die andere Seite wird nicht benötigt und kann vor oder nach der Montage der Potentialausgleichsschiene am Windenergieanlagenrotorblatt abgetrennt werden.

In einer Ausgestaltung erstreckt sich der mit der einen Potentialausgleichsschiene verbundene Schenkel bis an die andere Potentialausgleichsschiene heran. Mit anderen Worten überbrückt der Schenkel den seitlichen Abstand zwischen den beiden Potentialausgleichsschienen und stellt somit ein wesentliches Element der elektrischen Verbindung dar.

In einer Ausgestaltung weisen die beiden Potentialausgleichsschienen jeweils einen Schenkel auf und die beiden Schenkel sind dazu ausgebildet, im Bereich zwischen den beiden Potentialausgleichsschienen parallel zueinander ausgerichtet und in flächigen Kontakt miteinander gebracht zu werden. Die Kontaktfläche zwischen den beiden Schenkeln kann insbesondere an der Profilendkante eines Windenergieanlagenrotorblatts, an dem die Potentialausgleichsanordnung befestigt ist, beginnen und sich von dort aus in Strömungsrichtung nach hinten erstrecken, bis zum hinteren Ende der Schenkel und/oder der Potentialausgleichsschienen. In jedem Fall wird ein großflächiger, elektrischer Kontakt zwischen den beiden Potentialausgleichsschienen geschaffen. Die Schenkel der beiden Potentialausgleichsschienen sind verschränkt angeordnet. Das heißt, dass der mit der druckseitigen Potentialausgleichsschiene verbundene Schenkel bündig mit der Außenseite der saugseitigen Potentialausgleichsschiene abschließt. Der mit der saugseitigen Potentialausgleichsschiene verbundene Schenkel schließt bündig mit der Außenseite der druckseitigen Potentialausgleichsschiene ab.

In einer Ausgestaltung sind die beiden Schenkel miteinander verschraubt. Durch die Verschraubung können die beiden Schenkel im Bereich der Kontaktfläche fest aneinander gepresst werden. Einer der beiden Schenkel kann eine Gewindebohrung, der andere ein Loch oder Langloch aufweisen, durch das ein Gewindebolzen eingesetzt und in die Gewindebohrung eingeschraubt werden kann. Bei der Verwendung eines Langlochs kann die relative Anordnung der beiden Potentialausgleichsschienen in seitlicher Richtung zueinander angepasst werden.

In einer Ausgestaltung weist mindestens eines der vorderen Enden ein Langloch auf, dessen Längsrichtung in Längsrichtung der betreffenden Potentialausgleichsschiene angeordnet ist. Bei dieser Ausgestaltung können Fertigungstoleranzen bei der Positionierung der Anschlussstücke im Windenergieanlagenrotorblatt in Strömungsrichtung ausgeglichen werden, indem ein Befestigungsmittel an der entsprechenden Position des Langlochs durch das vordere Ende der Potentialausgleichsschiene eingesetzt und mit dem betreffenden Anschlussstück verbunden wird. Fertigungstoleranzen quer zur Strömungsrichtung, d. h. im Wesentlichen in Richtung der Profilendkante, können wie bereits erläutert durch die Querverbindung kompensiert werden.

In einer Ausgestaltung ist die druckseitige Potentialausgleichsschiene gekrümmt, um einer Krümmung der Druckseite des Profils des Windenergieanlagenrotorblatts zu entsprechen und/oder die saugseitige Potentialausgleichsschiene ist gekrümmt, um einer Krümmung der Saugseite des Profils des Windenergieanlagenrotorblatts zu entsprechen. Durch diese Maßnahme können die Potentialausgleichsschienen überall flächig an das Windenergieanlagenrotorblatt angelegt werden, was eine einfache Befestigung begünstigt und die Beeinträchtigung der Aerodynamik des Windenergieanlagenrotorblatts minimiert.

In einer Ausgestaltung ist mindestens eine der beiden Potentialausgleichsschienen im Querschnitt trapezförmig, wobei die längere Parallelseite des Trapezes eine Innenseite der betreffenden Potentialausgleichsschiene bildet. Mit der Innenseite der Potentialausgleichsschiene ist die dem Windenergieanlagenrotorblatt zugewandte Seite der Potentialausgleichsschiene gemeint. Bei dieser Ausgestaltung sind also die seitlichen Flächen der Potentialausgleichsschiene abgeschrägt und laufen nach außen hin flach aus, zur Oberfläche des Windenergieanlagenrotorblatts hin. Diese Ausbildung ist aerodynamisch besonders günstig.

Die Potentialausgleichsschienen können insbesondere so angeordnet sei, dass sie einen Potentialausgleich um eine

Profilendkante des Windenergieanlagenrotorblatts herum bewirken. Die Querverbindung ist in diesem Fall an der Profilendkante des Windenergieanlagenrotorblatts angeordnet.

In einer Ausgestaltung sind die beiden Potentialausgleichsschienen entlang einer sich im Betrieb des Windenergieanlagenrotorblatts einstellenden Strömungsrichtung ausgerichtet. Dies ist aerodynamisch vorteilhaft.

In einer Ausgestaltung sind die beiden Anschlussstücke jeweils elektrisch mit einem Blitzschutzleiter des Windenergieanlagenrotorblatts verbunden. Beispielsweise kann es sich um einen druckseitigen und einen saugseitigen Blitzschutzleiter handeln und die Potentialausgleichsanordnung kann einen Potentialausgleich zwischen diesen beiden Blitzschutzleitern herstellen.

Die Erfindung wird nachfolgend anhand von in Figuren dargestellten Ausführungsbeispielen näher erläutert. Es zeigen:
- Fig. 1: eine erfindungsgemäße Potentialausgleichsanordnung an einem ausschnittsweise dargestellten Windenergieanlagenrotorblatt in einer schematischen Ansicht,
- Fig. 2: eine der beiden Potentialausgleichsschienen aus Fig. 1 in einer Draufsicht,
- Fig. 3: die Potentialausgleichsschiene aus Fig. 2 in einer perspektivischen Ansicht,
- Fig. 4: ein anderes Ausführungsbeispiel einer erfindungsgemäßen Potentialausgleichsanordnung in einer perspektivischen Darstellung,
- Fig. 5: die Potentialausgleichsanordnung aus Fig. 4 in einer Draufsicht von der Seite.

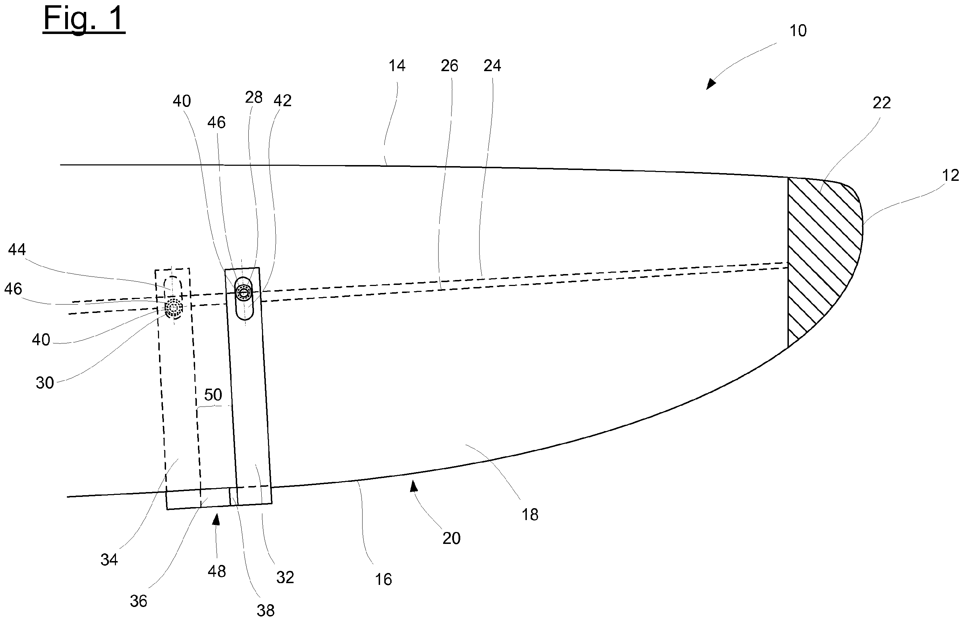

Fig. 1 zeigt einen blattspitzenseitigen Abschnitt eines Windenergieanlagenrotorblattes 10, welcher eine Blattspitze 12, eine Profilnasenkante 14, eine Profilendkante 16, eine dem Betrachter zugewandte Saugseite 18 und eine vom Betrachter abgewandte Druckseite 20 aufweist.

An der Blattspitze 12 ist ein Blitzrezeptor 22 angeordnet, der mit einem saugseitigen Blitzschutzleiter 24 und mit einem druckseitigen Blitzschutzleiter 26 verbunden ist. Die beiden Blitzschutzleiter 24, 26 führen zu einer nicht dargestellten Blattwurzel und sind in eine saugseitige bzw. in eine druckseitige Halbschale des Windenergieanlagenrotorblatts 10 integriert.

Mit dem saugseitigen Blitzschutzleiter 24 ist ein Anschlussstück 28, das aus einem zylindrischen Metallkörper mit einer Gewindebohrung besteht, verbunden. Mit einem ebensolchen Anschlussstück 30 ist der druckseitige Blitzschutzleiter 26 verbunden. Die beiden Anschlussstücke 28, 30 sind in das Windenergieanlagenrotorblatt 10 integriert, ebenfalls jeweils in die betreffende Halbschale.

Um einen Potentialausgleich zwischen den beiden Blitzschutzleitern 24, 26 herzustellen, weist das Windenergieanlagenrotorblatt 10 eine Potentialausgleichsanordnung auf, die eine saugseitige Potentialausgleichsschiene 32, eine druckseitige Potentialausgleichsschiene 34 und eine Querverbindung 48 umfasst. Die beiden Potentialausgleichsschienen 32, 34 bestehen jeweils aus einem im Querschnitt trapezförmigen Kupferstrang. Vordere Enden der beiden Potentialausgleichsschienen 32, 34 sind elektrisch mit jeweils einem der beiden Anschlussstücke 28, 30 verbunden. Die Potentialausgleichsschiene 32 weist hierzu an ihrem vorderen Ende ein Langloch 42 auf, das oberhalb des Anschlussstücks 30 angeordnet ist. Zur Herstellung der elektrischen Verbindung zwischen dem vorderen Ende der saugseitigen Potentialausgleichsschiene 32 und dem Anschlussstück 28 ist eine Scheibe 46 in das Langloch 42 eingesetzt und mit einem Gewindebolzen 40, der in eine Gewindebohrung des Anschlussstücks 28 eingeschraubt ist, befestigt. Die druckseitige Potentialausgleichsschiene 34 ist auf dieselbe Art und Weise mit dem Anschlussstück 30 verbunden und weist hierzu ein Langloch 44 auf.

Die Querverbindung 48 weist einen Schenkel 36 auf, der mit der druckseitigen Potentialausgleichsschiene 34 verschweißt ist, sowie einen Schenkel 38, der mit der saugseitigen Potentialausgleichsschiene 32 verschweißt und in der Fig. 1 von dem Schenkel 36 teilweise verdeckt ist. Die beiden Schenkel 36, 38 liegen großflächig aneinander an und stellen so einen elektrischen Kontakt her. Die Kontaktfläche erstreckt sich von der Profilendkante 16 über die gesamte Breite der Querverbindung 48 bis zu deren hinterem Ende.

Der seitliche Abstand 50 zwischen den beiden Potentialausgleichsschienen 32, 34 wird von der Querverbindung 48 überbrückt. Man erkennt, dass der Schenkel 36 vom hinteren Ende der druckseitigen Potentialausgleichsschiene 34 bis an die saugseitige Potentialausgleichsschiene 32 heranreicht. Ebenso reicht der Schenkel 38 vom hinteren Ende der saugseitigen Potentialausgleichsschiene 32 bis an die druckseitige Potentialausgleichsschiene 34 heran.

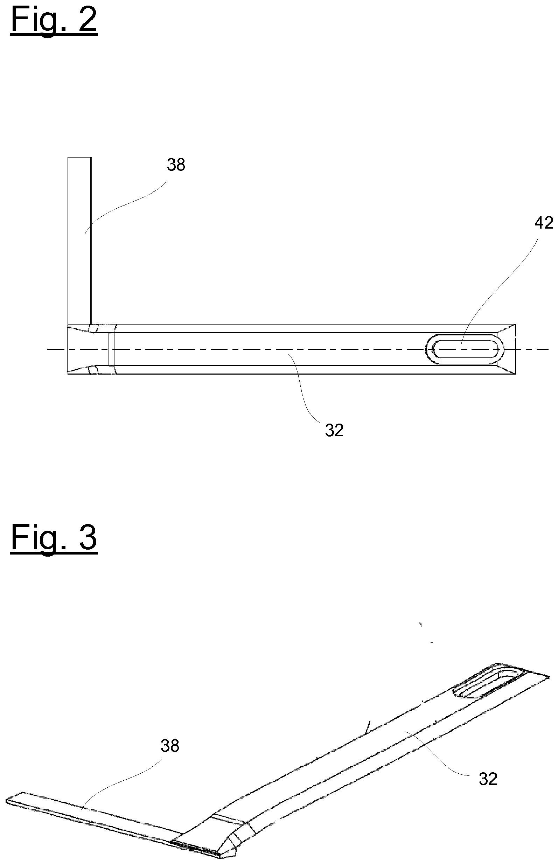

Fig. 2 zeigt die saugseitige Potentialausgleichsschiene 32 mit ihrem Schenkel 38 in Alleinstellung. Man erkennt besonders gut das im vorderen Ende der Potentialausgleichsschiene 32 ausgebildete Langloch 42 und dass die Potentialausgleichsschiene 32 im Querschnitt trapezförmig ausgebildet ist. Der Schenkel 38 liegt an einer Unterseite des hinteren Endes der Potentialausgleichsschiene 32 an und ist dort mit dieser verschweißt.

Fig. 3 zeigt dieselbe Anordnung nochmals in einer perspektivischen Darstellung, in der man gut den Querschnitt des Schenkels 38 erkennt. Dieser ist annähernd dreieckig, mit einer in der Fig. 3 dem Betrachter zugewandten hinteren Kante, die bis auf eine sehr geringe Höhe ausläuft.

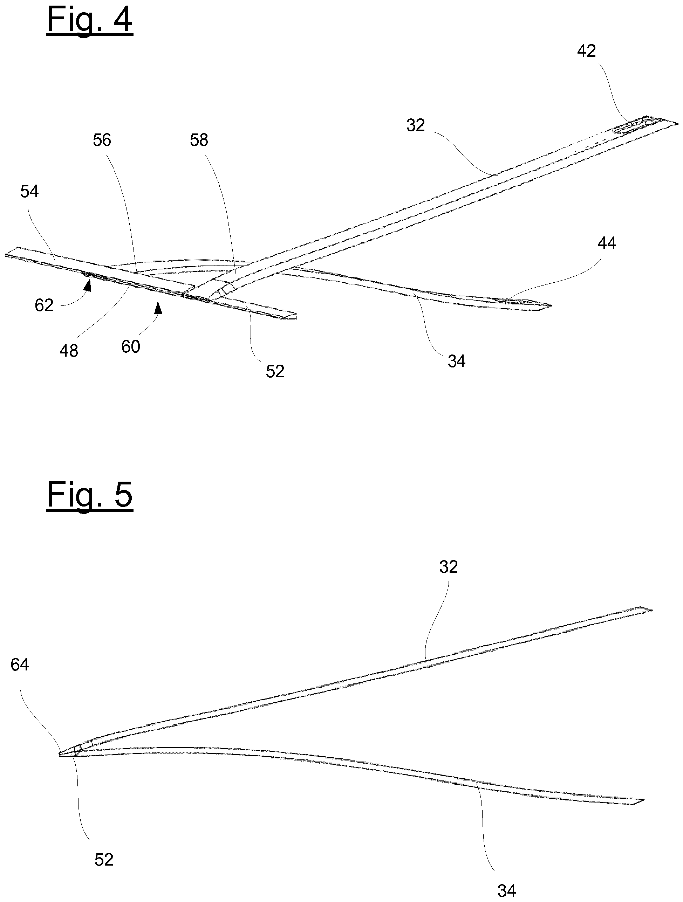

Fig. 4 zeigt ein anderes Ausführungsbeispiel einer erfindungsgemäßen Potentialausgleichsanordnung, wobei für die dem ersten Ausführungsbeispiel entsprechenden Elemente dieselben Bezugszeichen verwendet werden. Auch diese Potentialausgleichsanordnung hat eine saugseitige Potentialausgleichsschiene 32 und eine druckseitige Potentialausgleichsschiene 34, jeweils mit einem Langloch 42, 44 am vorderen Ende. Beide Potentialausgleichsschienen 32, 34 weisen an ihrem hinteren Ende jeweils einen Schenkel 52, 54 auf, der sich von dem hinteren Ende der betreffenden Potentialausgleichsschiene 32, 34 in entgegengesetzte Richtungen erstreckt, parallel zu einer Profilendkante und im rechten Winkel zu einer Längsrichtung der betreffenden Potentialausgleichsschiene. Die beiden zu der jeweils anderen Potentialausgleichsschiene 32, 34 hin erstreckten Seiten der Schenkel 52, 54 bilden gemeinsam die Querverbindung 48. Die beiden in die entgegengesetzten Richtungen weisenden Seiten der Schenkel 52, 54 tragen zur Querverbindung 48 nichts bei und können bevorzugt abgetrennt werden.

Man erkennt, dass eine saugseitige Fläche 56 der Querverbindung 48, gebildet von dem Schenkel 54, bündig mit einer Außenseite 58 der saugseitigen Potentialausgleichsschiene 32 abschließt. Die druckseitige Fläche 60 der Querverbindung 48, gebildet von dem Schenkel 52, schließt entsprechend bündig mit einer Außenseite 62 der druckseitigen Potentialausgleichsschiene 34 ab.

Dieses bündige Abschließen ist in der Draufsicht der Fig. 5 ebenfalls gut erkennbar. Man erkennt auch, dass sich die saugseitige Potentialausgleichsschiene 32 und die druckseitige Potentialausgleichsschiene 34 in der Seitenansicht zu einer V-Form ergänzen, entsprechend einem hinteren Teil des Profils des Windenergieanlagenrotorblatts 10. Die Höhe der Querverbindung 48 an ihrem hinteren Ende 64 liegt im Bereich von 2 mm bis 5 mm.

### Liste der verwendeten Bezugszeichen:

- 10: Windenergieanlagenrotorblatt
- 12: Blattspitze
- 14: Profilnasenkante
- 16: Profilendkante
- 18: Saugseite
- 20: Druckseite
- 22: Blitzrezeptor
- 24: Saugseitiger Blitzschutzleiter
- 26: Druckseitiger Blitzschutzleiter
- 28, 30: Anschlussstück
- 32: Saugseitige Potentialausgleichsschiene
- 34: Druckseitige Potentialausgleichsschiene
- 36: Schenkel der druckseitigen Potentialausgleichsschiene
- 38: Schenkel der saugseitigen Potentialausgleichsschiene
- 40: Gewindebolzen
- 42, 44: Langloch
- 46: Scheibe
- 48: Querverbindung
- 50: Seitlicher Abstand
- 52, 54: Schenkel
- 56: Saugseitige Fläche der Querverbindung
- 58: Außenseite der saugseitigen Potentialausgleichsschiene
- 60: Druckseitige Fläche der Querverbindung
- 62: Außenseite der druckseitigen Potentialausgleichsschiene
- 64: Hinteres Ende der Querverbindung

## Patentansprüche

1. Windenergieanlagenrotorblatt (10) mit zwei integrierten, elektrischen Anschlussstücken (28, 30) und einer an einer Außenseite des Windenergieanlagenrotorblatts (10) befestigten Potentialausgleichsanordnung zur elektrischen Verbindung der zwei Anschlussstücke (28, 30), wobei die Potentialausgleichsanordnung die folgenden Merkmale aufweist:
• eine saugseitige Potentialausgleichsschiene (32), die an einer Saugseite (18) des Windenergieanlagenrotorblatts (10) angeordnet ist,
• eine druckseitige Potentialausgleichsschiene (34), die an einer Druckseite (20) des Windenergieanlagenrotorblatts (10) angeordnet ist, und
• eine Querverbindung (48), die ein hinteres Ende der saugseitigen Potentialausgleichsschiene (32) mit einem hinteren Ende der druckseitigen Potentialausgleichsschiene (34) verbindet und einen seitlichen Abstand (50) zwischen den beiden Potentialausgleichsschienen (32, 34) überbrückt,
• wobei die beiden Potentialausgleichsschienen (32, 34) jeweils ein vorderes Ende aufweisen, das elektrisch mit einem der Anschlussstücke (28, 30) verbunden ist.

2. Windenergieanlagenrotorblatt (10) nach Anspruch 1, **dadurch gekennzeichnet, dass** eine druckseitige Fläche (60) der Querverbindung (48) bündig mit einer Außenseite (62) der druckseitigen Potentialausgleichsschiene (34) und/oder eine saugseitige Fläche (56) der Querverbindung (48) bündig mit einer Außenseite (58) der saugseitigen Potentialausgleichsschiene (32) abschließt.

3. Windenergieanlagenrotorblatt (10) nach Anspruch 1 oder 2, **dadurch gekennzeichnet, dass** die Querverbindung (48) in Strömungsrichtung nach hinten dünn ausläuft auf eine Höhe von 5 mm oder weniger.

4. Windenergieanlagenrotorblatt (10) nach einem der Ansprüche 1 bis 3, **dadurch gekennzeichnet, dass** eine der beiden Potentialausgleichsschienen (32, 34) einen mit dem hinteren Ende dieser Potentialausgleichsschiene (32, 34) verbundenen Schenkel (52, 54) aufweist, der sich quer zu einer Längsrichtung dieser Potentialausgleichsschiene (32, 34) erstreckt und der die Querverbindung (48) oder einen Teil davon bildet.

5. Windenergieanlagenrotorblatt (10) nach Anspruch 4, **dadurch gekennzeichnet, dass** sich der Schenkel (52, 54) ausgehend von dem hinteren Ende der Potentialausgleichsschiene (32, 34) in beide Richtungen erstreckt.

6. Windenergieanlagenrotorblatt (10) nach Anspruch 4 oder 5, **dadurch gekennzeichnet, dass** sich der mit der einen Potentialausgleichsschiene (32, 34) verbundene Schenkel (52, 54) bis an die andere Potentialausgleichsschiene (32, 34) heran erstreckt.

7. Windenergieanlagenrotorblatt (10) nach einem der Ansprüche 4 bis 6, **dadurch gekennzeichnet, dass** die beiden Potentialausgleichsschienen (32, 34) jeweils einen Schenkel (52, 54) aufweisen und die beiden Schenkel (52, 54) im Bereich zwischen den beiden Potentialausgleichsschienen (32, 34) parallel zueinander ausgerichtet und in flächigen Kontakt miteinander gebracht sind.

8. Windenergieanlagenrotorblatt (10) nach Anspruch 7, **dadurch gekennzeichnet, dass** die beiden Schenkel (52, 54) miteinander verschraubt sind.

9. Windenergieanlagenrotorblatt (10) nach einem der Ansprüche 1 bis 8, **dadurch gekennzeichnet, dass** mindestens eins der vorderen Enden ein Langloch (42, 44) aufweist, dessen Längsrichtung in Längsrichtung der betreffenden Potentialausgleichsschiene (32, 34) angeordnet ist.

10. Windenergieanlagenrotorblatt (10) nach einem der Ansprüche 1 bis 9, **dadurch gekennzeichnet, dass** die druckseitige Potentialausgleichsschiene (34) gekrümmt ist, um einer Krümmung der Druckseite (20) des Profils des Windenergieanlagenrotorblatts (10) zu entsprechen und/oder dass die saugseitige Potentialausgleichsschiene (32) gekrümmt ist, um einer Krümmung der Saugseite (18) des Profils des Windenergieanlagenrotorblatts (10) zu entsprechen.

11. Windenergieanlagenrotorblatt (10) nach einem der Ansprüche 1 bis 10, **dadurch gekennzeichnet, dass** mindestens eine der Potentialausgleichsschienen (32, 34) im Querschnitt trapezförmig ist, wobei die längere Parallelseite des Trapezes eine Innenseite der betreffenden Potentialausgleichsschiene (32, 34) bildet.

12. Windenergieanlagenrotorblatt (10) nach einem der Ansprüche 1 bis 11, **dadurch gekennzeichnet, dass** die beiden Potentialausgleichsschienen (32, 34) entlang einer sich im Betrieb des Windenergieanlagenrotorblatts (10) einstellenden Strömungsrichtung ausgerichtet sind.

13. Windenergieanlagenrotorblatt (10) nach einem der Ansprüche 1 bis 12, **dadurch gekennzeichnet, dass** die beiden Anschlussstücke (28, 30) jeweils elektrisch mit einem Blitzschutzleiter (24, 26) des Windenergieanlagenrotorblatts (10) verbunden sind.

## Claims

1. A wind turbine rotor blade (10) with two integrated electrical connecting pieces (28, 30) and one equipotential bonding arrangement fastened to an outer side of the wind turbine rotor blade (10) for electrically connecting the two connecting pieces (28, 30), wherein the equipotential bonding arrangement has the following features:
• a suction side equipotential bonding rail (32) that is arranged on a suction side (18) of the wind turbine rotor blade (10),
• a pressure side equipotential bonding rail (34) that is arranged on a pressure side (20) of the wind turbine rotor blade (10), and
• a cross connection (48) that connects a rear end of the suction side equipotential bonding rail (32) to a rear end of the pressure side equipotential bonding rail (34) and bridges a lateral distance (50) between the two equipotential bonding rails (32, 34),
• wherein the two equipotential bonding rails (32, 34) each have a front end that is electrically connected to one of the connecting pieces (28, 30).

2. The wind turbine rotor blade (10) according to claim 1, **characterized in that** a pressure side surface (60) of the cross connection (48) terminates flush with an outer side (62) of the pressure side equipotential bonding rail (34), and/or a suction side surface (56) of the cross connection (48) terminates flush with an outer side (58) of the suction side of the equipotential bonding rail (32).

3. The wind turbine rotor blade (10) according to claim 1 and 2, **characterized in that** the cross connection (48) tapers thin to the rear in the direction of flow to a height of 5 mm or less.

4. The wind turbine rotor blade (10) according to one of claims 1 to 3, **characterized in that** one of the two equipotential bonding rails (32, 34) has a leg (52, 54) connected to the rear end of the equipotential bonding rail (32, 34) that extends transverse to a longitudinal direction of this equipotential bonding rail (32, 34), and that forms the cross connection (48) or a part thereof.

5. The wind turbine rotor blade (10) according to claim 4, **characterized in that** the legs (52, 54) extend in both directions starting from the rear end of the equipotential bonding rail (32, 34).

6. The wind turbine rotor blade (10) according to claim 4 or 5, **characterized in that** the leg (52, 54) connected to one of the equipotential bonding rails (32, 34) extends up to the other equipotential bonding rail (32, 34).

7. The wind turbine rotor blade (10) according to one of claims 4 to 6, **characterized in that** the two equipotential bonding rails (32, 34) each have a leg (52, 54), and the two legs (52, 54) are aligned parallel to each other in the region between the two equipotential bonding rails (32, 34) and are brought into flat contact with each other.

8. The wind turbine rotor blade (10) according to claim 7, **characterized in that** the two legs (52, 54) are screwed to each other.

9. The wind turbine rotor blade (10) according to one of claims 1 to 8, **characterized in that** at least one of the front ends has a slot (42, 44) whose longitudinal direction is arranged in the longitudinal direction of the relevant equipotential bonding rail (32, 34).

10. The wind turbine rotor blade (10) according to one of claims 1 to 9, **characterized in that** the pressure side equipotential bonding rail (34) is curved in order to correspond to a curvature of the pressure side (20) of the profile of the wind turbine rotor blade (10), and/or the suction side equipotential bonding rail (32) is curved in order to correspond to a curvature of the suction side (18) of the profile of the wind turbine rotor blade (10).

11. The wind turbine rotor blade (10) according to one of claims 1 to 10, **characterized in that** at least one of the equipotential bonding rails (32, 34) has a trapezoidal cross-section, wherein the longer parallel side of the trapezoid forms an inner side of the relevant equipotential bonding rail (32, 34).

12. The wind turbine rotor blade (10) according to one of claims 1 to 11, **characterized in that** the two equipotential bonding rails (32, 34) are oriented along a direction of flow that arises during operation of the wind turbine rotor blade (10).

13. The wind turbine rotor blade (10) according to one of claims 1 to 12, **characterized in that** the two connecting pieces (28, 30) are each electrically connected to a lightning conductor (24, 26) of the wind turbine rotor blade (10).

## Revendications

1. Pale de rotor d'éolienne (10) avec deux pièces de raccordement électriques intégrées (28, 30) et un dispositif d'équilibrage de potentiel fixé sur un côté extérieur de la pale de rotor d'éolienne (10) pour la liaison électrique des deux pièces de raccordement (28, 30), dans laquelle le dispositif d'équilibrage de potentiel présente les caractéristiques suivantes :
• un rail d'équilibrage de potentiel côté aspiration (32), lequel est disposé sur un côté aspiration (18) de la pale de rotor d'éolienne (10),
• un rail d'équilibrage de potentiel côté pression (34), lequel est disposé sur un côté pression (20) de la pale de rotor d'éolienne (10), et
• un élément de liaison transversal (48), laquelle relie une extrémité arrière du rail d'équilibrage de potentiel côté aspiration (32) à une extrémité arrière du rail d'équilibrage de potentiel côté pression (34) et enjambe un écart latéral (50) entre les deux rails d'équilibrage de potentiel (32, 34),
• dans laquelle les deux rails d'équilibrage de potentiel (32, 34) présentent respectivement une extrémité avant électriquement reliée à l'une des pièces de raccordement (28, 30).

2. Pale de rotor d'éolienne (10) selon la revendication 1, **caractérisée en ce qu'**une surface côté pression (60) de l'élément de liaison transversal (48) est à fleur d'un côté extérieur (62) du rail d'équilibrage de potentiel côté pression (34) et/ou une surface côté aspiration (56) de l'élément de liaison transversal (48) est à fleur d'un côté extérieur (58) du rail d'équilibrage de potentiel côté aspiration (32).

3. Pale de rotor d'éolienne (10) selon la revendication 1 ou 2, **caractérisée en ce que** l'élément de liaison transversal (48) s'amincit vers l'arrière dans la direction d'écoulement sur une hauteur de 5 mm ou moins.

4. Pale de rotor d'éolienne (10) selon l'une des revendications 1 à 3, **caractérisée en ce que** l'un des deux rails d'équilibrage de potentiel (32, 34) présente une branche (52, 54) reliée à l'extrémité arrière de ce rail d'équilibrage de potentiel (32, 34), laquelle s'étendant transversalement à une direction longitudinale de de ce rail d'équilibrage de potentiel (32, 34) et laquelle forme l'élément de liaison transversal (48) ou une partie de celui-ci.

5. Pale de rotor d'éolienne (10) selon la revendication 4, **caractérisée en ce que** la branche (52, 54) s'étend dans les deux directions à partir de l'extrémité arrière du rail d'équilibrage de potentiel (32, 34).

6. Pale de rotor d'éolienne (10) selon la revendication 4 ou 5, **caractérisée en ce que** la branche (52, 54) reliée à l'un des rails d'équilibrage de potentiel (32, 34) s'étend jusqu'à l'autre rail d'équilibrage de potentiel (32, 34).

7. Pale de rotor d'éolienne (10) selon l'une des revendications 4 à 6, **caractérisée en ce que** les deux rails d'équilibrage de potentiel (32, 34) présentent respectivement une branche (52, 54) et les deux branches (52, 54) sont orientées parallèlement l'une à l'autre dans la région située entre les deux rails d'équilibrage de potentiel (32, 34) et mis en contact surfacique l'une avec l'autre.

8. Pale de rotor d'éolienne (10) selon la revendication 7, **caractérisée en ce que** les deux branches (52, 54) sont vissées ensemble.

9. Pale de rotor d'éolienne (10) selon l'une des revendications 1 à 8, **caractérisée en ce qu'**au moins l'une des extrémités avant présente un trou oblong (42, 44), dont la direction longitudinale est disposée dans la direction longitudinale du rail d'équilibrage de potentiel (32, 34) concerné.

10. Pale de rotor d'éolienne (10) selon l'une des revendications 1 à 9, **caractérisée en ce que** le rail d'équilibrage de potentiel côté pression (34) est courbe de manière à correspondre à une courbure du côté pression (20) du profil de la pale de rotor d'éolienne (10) et/ou **en ce que** le rail d'équilibrage de potentiel côté aspiration (32) est courbe de manière à correspondre à une courbure du côté aspiration (18) du profil de la pale de rotor d'éolienne (10).

11. Pale de rotor d'éolienne (10) selon l'une des revendications 1 à 10, **caractérisée en ce qu'**au moins l'un des rails d'équilibrage de potentiel (32, 34) présente une section transversale trapézoïdale, le côté parallèle plus long du trapèze formant un côté intérieur du rail d'équilibrage de potentiel (32, 34) concerné.

12. Pale de rotor d'éolienne (10) selon l'une des revendications 1 à 11, **caractérisée en ce que** les deux rails d'équilibrage de potentiel (32, 34) sont orientés le long d'une direction d'écoulement s'établissant pendant le fonctionnement de la pale de rotor d'éolienne (10).

13. Pale de rotor d'éolienne (10) selon l'une des revendications 1 à 12, **caractérisée en ce que** les deux pièces de raccordement (28, 30) sont respectivement reliées électriquement à un conducteur de parafoudre (24, 26) de la pale de rotor d'éolienne (10).
